(19) Europäisches Patentamt / European Patent Office / Office européen des brevets

(11) **EP 2 042 761 B1**

(12) **FASCICULE DE BREVET EUROPEEN**

(45) Date de publication et mention
de la délivrance du brevet:
**02.04.2014 Bulletin 2014/14**

(51) Int Cl.:
***F16C 33/58*** *(2006.01)*   ***F16C 43/06*** *(2006.01)*

(21) Numéro de dépôt: **08290914.4**

(22) Date de dépôt: **29.09.2008**

(54) **Assemblage de palier de roulements à billes pourvu d'un bouchon radial**

Montage eines Kugelwälzlagers, das mit einem radialen Verschlussdeckel ausgestattet ist

Ball bearing assembly provided with a radial plug

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **27.09.2007 FR 0706783**

(43) Date de publication de la demande:
**01.04.2009 Bulletin 2009/14**

(73) Titulaire: **S.N.R. ROULEMENTS
74000 Annecy (FR)**

(72) Inventeur: **Batail, Emmanuel
74960 Meythet (FR)**

(74) Mandataire: **Novagraaf Technologies
122, rue Edouard Vaillant
92593 Levallois-Perret Cedex (FR)**

(56) Documents cités:
**EP-A- 0 811 777     GB-A- 2 095 346
US-A- 2 759 243     US-A- 5 097 565**

**Description**

**DOMAINE TECHNIQUE DE L'INVENTION**

L'invention a trait à une bague de roulement à billes destiné à accepter de fortes charges radiales et axiales.

**ÉTAT DE LA TECHNIQUE**

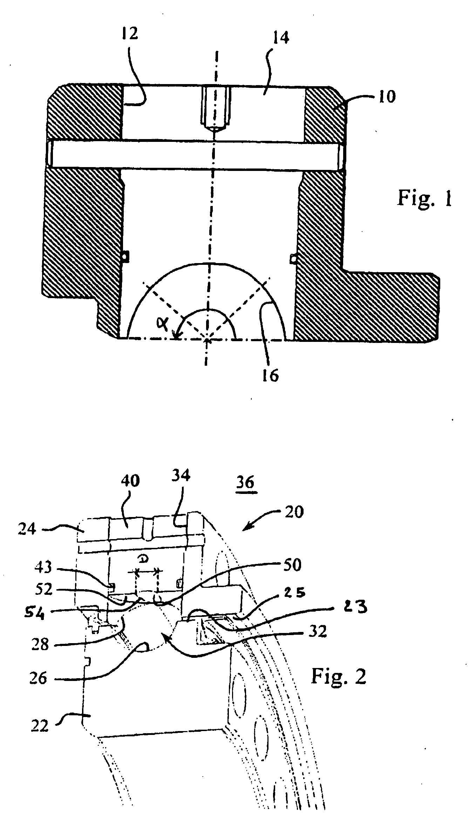

Sur la figure 1 est représenté un détail d'une bague extérieure 10 de roulement à billes de l'état de la technique. Pour accepter de fortes charges radiales et axiales bidirectionnelles, cette bague 10 est pourvue d'un chemin de roulement profond enveloppant les billes, ayant en section axiale (c'est-à-dire dans un plan comportant l'axe de révolution de la bague) un profil en ogive constitué de deux arcs de cercle dont les centres sont très proches, de sorte que sur la figure le profil résultant semble se confondre avec un arc de cercle unique. À l'intersection des deux arcs de l'ogive est défini le fond du chemin. Chaque arc de cercle s'étend sur un secteur angulaire proche de 90°. La profondeur du chemin de roulement rend le montage des billes délicat. Afin d'insérer les billes entre les bagues intérieure et extérieure du roulement, on a recours à un alésage radial 12 pratiqué dans la bague extérieure 10 du roulement et débouchant directement au niveau du chemin de roulement. Après insertion des billes, on obture cet alésage à l'aide d'un bouchon en acier 14 représenté sur la figure. Ce bouchon dispose d'un fond pourvu d'une gorge 16 de profil en arc de cercle identique à celui du chemin de roulement pour assurer la continuité entre les rebords de l'alésage (12) et le chemin de roulement, à leur intersection, avec un angle d'ouverture $\alpha$ légèrement inférieur à 180°.

Pour éviter les discontinuités entre le chemin de roulement et le fond du bouchon, on usine le fond du bouchon en même temps que les chemins de roulement. En pratique, le bouchon, dont le fond n'est pas encore formé, est tout d'abord monté dans l'alésage et fixé en place. On procède ensuite à un traitement thermique local comportant un chauffage par induction au niveau du chemin de roulement et du fond du bouchon, à l'aide d'un inducteur torique disposé en regard du chemin de roulement, suivi d'une trempe par aspersion d'un liquide de refroidissement au niveau du chemin de roulement et du fond du bouchon. Enfin, le chemin de roulement et le fond du bouchon sont rectifiés à la meule ou usinés par un outil abrasif de superfinition, pour leur conférer leur état de surface final. À l'issue de ces étapes de fabrication, il est nécessaire de démonter le bouchon, pour pouvoir ultérieurement insérer les billes par l'alésage. Or la trempe, destinée à augmenter la dureté du chemin de roulement, a également pour effet de modifier la structure de l'acier constitutif du corps du bouchon, qui augmente de volume. Le démontage du bouchon n'est donc possible que si le pourtour du bouchon est revêtu d'une couche de matériau ductile à son interface avec l'alésage, en pratique une couche de cuivre qui diminue le frottement de contact.

Le bouchon est donc une pièce particulièrement onéreuse, dont le corps est dans une nuance d'acier trempant de haute qualité, et qui doit en outre être cuivrée sur son pourtour.

Le document GB 2 095 346 divulgue par ailleurs un assemblage pour palier de roulement à billes, comprenant une bague annulaire métallique définissant un axe géométrique de référence et présentant une face radiale annulaire sur laquelle est formé un chemin de roulement présentant un diamètre de fond de chemin, la bague étant traversée par un alésage radial mettant en communication le chemin de roulement avec le milieu ambiant, l'alésage ayant une section intérieure permettant le passage de billes depuis l'extérieur de la bague jusqu'à la face radiale annulaire, et un bouchon obturant l'alésage, le bouchon ayant un fond présentant une surface épousant une calotte sphérique, le bouchon étant radialement en retrait par rapport à la face radiale annulaire. Toutefois, il n'y a pas continuité parfaite entre la partie sphérique du bouchon et le chemin de roulement adjacent.

**OBJET DE L'INVENTION**

La présente invention vise à remédier aux inconvénients de l'état de la technique et à proposer un assemblage dont le bouchon soit de structure plus simple et de matériau moins noble.

Pour ce faire, il est proposé, selon un premier aspect de l'invention, un assemblage pour palier de roulement à billes, comprenant une bague de roulement à billes annulaire métallique définissant un axe géométrique de référence et présentant une face radiale annulaire de diamètre $\Phi_M$ sur laquelle est formé un chemin de roulement présentant un diamètre de fond de chemin $\Phi_F$, la bague étant traversée par un alésage radial mettant en communication le chemin de roulement avec le milieu ambiant, l'alésage ayant une section intérieure permettant le passage de billes de rayon $R^B$ depuis l'extérieur de la bague jusqu'à la face radiale annulaire, et un bouchon obturant l'alésage, le bouchon ayant un fond présentant une gorge dans la continuité du chemin de roulement, le bouchon étant radialement en retrait par rapport à la face radiale annulaire, la largeur axiale de la gorge étant inférieure au diamètre du fond du bouchon.

Cette géométrie permet une fabrication de la gorge lors de l'usinage du chemin de roulement.En disposant le fond du bouchon en retrait par rapport à la bague, on réduit la zone soumise à un traitement thermique et à un usinage. La pièce constitutive du bouchon est donc moins sollicitée lors de la fabrication, et se déforme moins, de sorte qu'il est possible de l'extraire de l'alésage après l'usinage, sans avoir recours à un cuivrage.

On peut d'ailleurs définir une surface de révolution qui enveloppe d'une part la totalité de la gorge et d'autre part la zone du chemin de roulement située au voisinage direct du fond du chemin de roulement. La gorge est, malgré ses dimensions réduites, en mesure d'assurer un guidage suffisant des billes. Naturellement, on prendra soin, dans les applications où la bague n'est pas sollicitée uniformément par les billes, de positionner le bouchon dans la zone de la bague la moins exposée. Il est à souligner que la gorge permet par ailleurs d'éviter que la meule de rectification se détériore au passage de l'alésage.

Préférentiellement, le fond du bouchon, axialement de part et d'autre de la gorge, est formé par des facettes sensiblement planes situées dans un même plan perpendiculaire à l'axe radial de l'alésage. En pratique, le rebord d'intersection entre la gorge et la partie plane du fond du bouchon est sensiblement une ellipse.

Selon une caractéristique avantageuse, l'assemblage pour palier de roulement à billes est pourvu en outre de billes de rayon $R_B$ en contact avec le chemin de roulement suivant une trajectoire circulaire de diamètre $\Phi_C$, caractérisé en ce que le fond (42) du bouchon se trouve à une distance L0 de l'axe de rotation de la bague telle que:

$$min\left(\frac{\Phi_M}{2},\frac{\Phi_C}{2}\right) < L_0 < max\left(\frac{\Phi_M}{2},\frac{\Phi_C}{2}\right)$$

avec : $\Phi_C = \Phi_E$ dans le cas où le contact extérieur est considéré ou $\Phi_C = \Phi_I$ dans le cas où le contact intérieur est considéré ;

Préférentiellement, le fond du bouchon se trouve à une distance $L_0$ de l'axe de rotation de la bague telle que:

$$\left|\frac{\Phi_F}{2} - L_0\right| \le \frac{|\Phi_F - \Phi_M|}{8}$$

et

$$min\left(\frac{\Phi_M}{2},\frac{\Phi_F}{2}\right) < L_0 < max\left(\frac{\Phi_M}{2},\frac{\Phi_F}{2}\right)$$

Pour assurer son positionnement précis, le bouchon peut être pourvu d'une portée annulaire venant en appui sur une portée correspondante de l'alésage.

La bague et le bouchon sont traversés par une goupille de fixation qui est utilisée pour solidariser le bouchon à la bague, tout d'abord lors de l'usinage du chemin de roulement et de la gorge du bouchon, puis lors du remontage du bouchon après insertion des billes.

Avantageusement, on peut prévoir un joint disposé entre le bouchon et l'alésage pour éviter les fuites de lubrifiant.

Selon un mode de réalisation, l'alésage a une section circulaire. Le positionnement angulaire du bouchon dans l'alésage est alors réalisé par la goupille.

Préférentiellement, le bouchon est réalisé en acier, dans une nuance qui peut être le cas échéant moins noble que la bague. Aucun cuivrage n'est nécessaire. La structure métallurgique du matériau constitutif de la bague au niveau du chemin de roulement et la structure métallurgique du bouchon au niveau de la gorge sont caractéristiques d'une trempe locale. Le chemin de roulement et la gorge sont de préférence rectifiés, ou superfinis.

Suivant les applications, la face radiale annulaire et le chemin de roulement peuvent être tournés radialement vers l'extérieur ou vers l'intérieur.

Suivant un mode de réalisation, l'assemblage comporte en outre une pièce pourvue d'un chemin de roulement situé en regard du chemin de roulement de la bague et des billes roulant sur les chemins de roulement, les billes ayant chacune deux points de contact avec le chemin de roulement de la bague et deux points de contact avec le chemin de roulement de la pièce. Si la bague est une bague extérieure, le fond du bouchon est situé radialement à l'extérieur des deux cercles de contact extérieurs décrits par les deux points de contact des billes avec le chemin de roulement de la bague. Inversement, si la bague est une bague intérieure, le fond du bouchon est situé radialement à l'intérieur des deux cercles de contact intérieurs décrits par les deux points de contact des billes avec le chemin de roulement de la bague.

Selon un mode de réalisation, la pièce constitue une deuxième bague. Alternativement, il peut également s'agir d'un arbre.

L'invention a également trait à un roulement à billes comportant : une bague extérieure définissant un axe géométrique de référence et présentant un chemin de roulement tourné radialement vers l'intérieur ; une bague intérieure comportant un chemin de roulement intérieur situé en regard du chemin de roulement extérieur ; et des billes roulant sur les chemins de roulement intérieur et extérieur, les billes ayant chacune deux points de contact avec le chemin de roulement intérieur et deux points de contact avec le chemin de roulement extérieur, les deux points de contact des billes avec la bague extérieure décrivant deux cercles de contact extérieurs lors de la rotation du roulement, la bague extérieure étant traversée par un alésage radial, l'alésage ayant une section intérieure permettant le passage des billes, un bouchon obturant l'alésage, le bouchon ayant un fond présentant une gorge formant une solution de continuité avec le chemin de roulement, le fond du bouchon étant situé radialement à l'extérieur des deux cercles de contact extérieurs.

L'invention a également trait à un roulement à billes comportant : une bague intérieure définissant un axe géométrique de référence et présentant un chemin de roulement tourné radialement vers l'extérieur ; une bague extérieure comportant un chemin de roulement extérieur situé en regard du chemin de roulement intérieur ; et des billes roulant sur les chemins de roulement intérieur et extérieur, les billes ayant chacune deux points de contact avec le chemin de roulement intérieur et deux points de contact avec le chemin de roulement extérieur, les deux points de contact des billes avec la bague intérieure décrivant deux cercles de contact intérieurs lors de la rotation du roulement, la bague intérieure étant traversée par un alésage radial, l'alésage ayant une section intérieure permettant le passage des billes, un bouchon obturant l'alésage, le bouchon ayant un fond présentant une gorge formant une solution de continuité avec le chemin de roulement, le fond du bouchon étant situé radialement à l'intérieur des deux cercles de contact intérieurs.

## BRÈVE DESCRIPTION DES FIGURES

La figure 1, déjà commentée, représente en section dans un plan axial un détail d'une bague de l'état de la technique.
La figure 2 représente en perspective un détail d'un assemblage pour roulement à billes selon un mode de réalisation de l'invention.
La figure 3 représente une section de l'assemblage de la figure 2, dans un plan axial.
La figure 4 représente schématiquement certaines caractéristiques géométriques de l'assemblage de la figure 2.
La figure 5 représente un assemblage selon un deuxième mode de réalisation de l'invention.

## EXEMPLE DE RÉALISATION

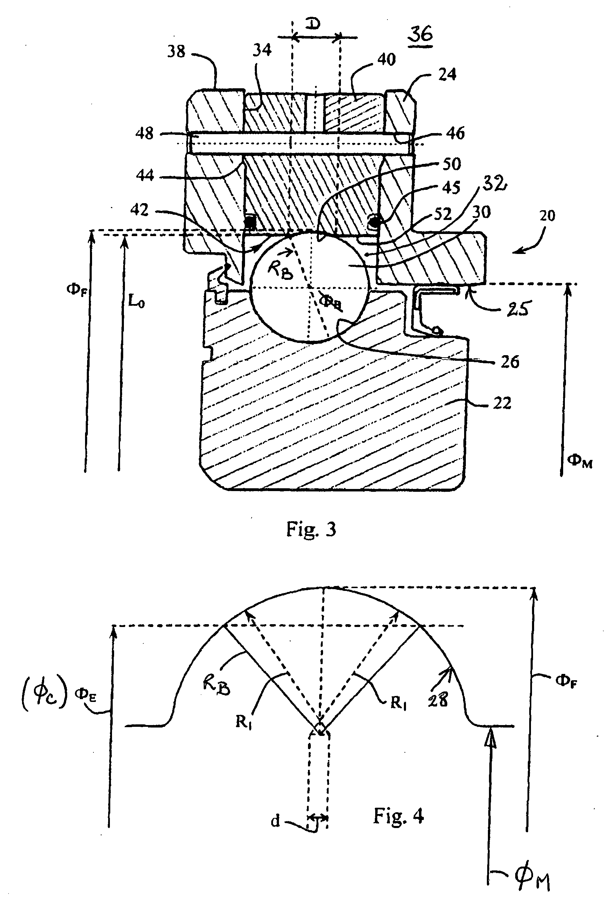

Sur les figures 2 et 3 est représenté un roulement à billes 20 comportant une bague intérieure 22 présentant une face radiale annulaire 23 et une bague extérieure 24 présentant une face radiale annulaire 25 de diamètre $\Phi_M$. Un chemin de roulement annulaire intérieur 26 est formé en creux à partir de la paroi cylindrique 23. De même est formé en creux par rapport à la paroi cylindrique 25 un chemin de roulement annulaire extérieur 28. Chaque chemin a une section axiale de forme concave entre deux rebords, et l'on définit pour le chemin de roulement extérieur 28 un diamètre de fond de chemin $\Phi_F$ mesuré dans un plan perpendiculaire à l'axe de rotation de la bague et correspondant à la partie la plus profonde du chemin de roulement et une largeur de chemin D, mesurée entre les deux rebords du chemin.

Comme montré en détail sur la figure 4, les chemins de roulement (28) ont chacun en coupe axiale une forme d'ogive constituée par deux arcs de cercle de rayons $R_1$, l'intersection des deux arcs définissant le fond de chemin, chaque arc de cercle s'étendant sur un secteur angulaire d'au moins 60°, mais de préférence supérieur à 75° du fond de chemin jusqu'au rebord correspondant. La distance d entre les centres des arcs de cercle est très faible, et vérifie:

$$0 < \frac{d}{R_1} \leq 0.15$$

C'est la raison pour laquelle sur les figures 2 et 3, la section en ogive semble se confondre avec une section en arc de cercle.

L'espace entre les chemins de roulement est destiné à être occupé par des billes 30 de rayon $R_B$ légèrement inférieur à $R_1$, de manière à ce que chaque bille ait deux points de contact avec chaque chemin de roulement. On peut alors définir deux cercles de contact extérieurs décrit par les points de contact des billes avec la bague extérieure et deux cercles de contact intérieurs décrits par les points de contact des billes avec la bague intérieure. Les cercles de contact extérieurs ont un diamètre identique $\Phi_E$ visible sur la figure 4 et les cercles de contact intérieurs un diamètre

identique $\Phi_I$ .

Chaque chemin de roulement est profond lorsqu'on le compare au diamètre $\Phi_B$ des billes, ce qui se traduit par le fait que:

$$0.8\,\Phi_B \leq |\Phi_F - \Phi_M| < \Phi_B$$

Pour insérer les billes 30 dans le volume annulaire 32 constitué entre les chemins de roulement est prévu un alésage radial 34 qui forme un puits de communication entre le volume 32 et le milieu ambiant extérieur 36. Dans l'exemple de réalisation, ce puits de communication 34 est formé sur la bague extérieure 24 et débouche d'une part au niveau du chemin de roulement extérieur 28 et d'autre part sur le pourtour extérieur 38 de la bague extérieure. Le puits 34 a une section circulaire et un diamètre R légèrement supérieur au diamètre des billes $R_B$, et, suivant un mode de réalisation, supérieur à $R_1$ , pour permettre le passage des billes 30.

Le puits 34 est obturé par un bouchon 40 en acier pourvu d'un fond 42 tourné vers le volume intérieur 32 du roulement, d'une gorge annulaire 43 pour accueillir un joint torique 45, d'une portée annulaire 44 et d'un alésage transversal 46 permettant l'insertion d'une goupille 48.

Le fond 42 du bouchon est conformé de manière à être en continuité avec le chemin de roulement 28. Il comporte de ce fait une gorge 50 dont la section (visible sur la figure 3) par un plan axial de la bague est en ogive, ayant le même profil que la partie la plus profonde du chemin de roulement 28 adjacent, de sorte que l'on peut définir une surface de révolution à section en ogive qui est commune à la partie la plus profonde du chemin de roulement et à la gorge (50).

Le fond 42 du bouchon, de part et d'autre de la gorge 50, est formé par des facettes 52 sensiblement planes situées dans un même plan perpendiculaire à l'axe radial de l'alésage, de sorte que le rebord 54 d'intersection entre la gorge (50) et la partie plane (52) du fond (42) du bouchon est sensiblement une ellipse. De manière remarquable, la distance $L_0$ entre le fond (42) du bouchon et l'axe de rotation de la bague, qui est pratiquement égale à la distance entre le plan géométrique des facettes planes 52 du fond du bouchon et l'axe de rotation de la bague est telle que:

$$\left|\frac{\Phi_F}{2} - L_0\right| \leq \frac{|\Phi_F - \Phi_M|}{8}$$

En d'autres termes, la gorge 50 n'est pas profonde et la partie plane 52 du fond du bouchon se trouve sensiblement en retrait dans le sens radial par rapport à la surface adjacente du chemin de roulement 28. Par ailleurs, le fond se trouve radialement à l'extérieur des cercles de contact extérieurs, ce qui se traduit par l'inégalité :

$$L_0 > \frac{\Phi_E}{2}$$

Le relief du fond du bouchon est obtenu de la manière suivante. On dispose d'une ébauche de bouchon dans un état initial pourvu d'un fond plat, et d'une ébauche de bague. Dans une première phase de fabrication, le bouchon, dont le fond est à l'origine plan et exempt de gorge, est monté dans l'alésage de la bague, dont le chemin de roulement n'est pas encore fini. On effectue ensuite une trempe locale du chemin de roulement par induction, en introduisant tout d'abord un inducteur torique dans l'espace intérieur délimité par le chemin de roulement, en regard de celui-ci pour chauffer par induction la couche superficielle du chemin de roulement, puis en aspergeant localement le chemin de roulement avec un liquide de refroidissement. Puis une meule de superfinition vient parfaire la surface du chemin de roulement et, dans la même passe, former la gorge dans le fond du bouchon. Dans la phase de trempe, le bouchon est relativement peu exposé à la chaleur, et reste en-dessous de la température permettant un effet significatif de trempe. De ce fait, il ne subit pas de variation de forme significative et peut être extrait sans difficulté, malgré l'absence de cuivrage.

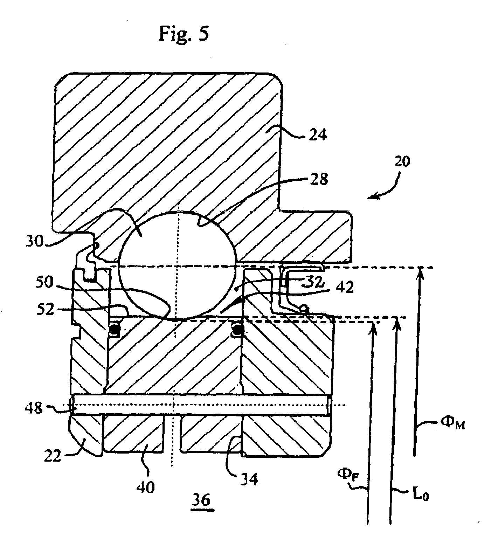

Sur la figure 5 est représenté un deuxième mode de réalisation de l'invention, suivant lequel l'alésage réalisant le puits de communication est formé sur la bague intérieure, et débouche d'une part au niveau du chemin de roulement intérieur de la bague intérieure et d'autre part sur la face radiale intérieure de la bague intérieure. Sur la figure 5 a été repris l'ensemble des signes de référence utilisés précédemment pour le premier mode de réalisation de l'invention pour les parties ayant des fonctions correspondantes. En considérant que $\Phi_M$ désigne maintenant le diamètre de la face cylindrique de la bague intérieure, et que $\Phi_F$ désigne le diamètre de fond de chemin mesuré sur la bague intérieure, les inéquations développées précédemment et liant $\Phi_F$, $\Phi_M$ à $L_0$ d'une part et au diamètre de bille $\Phi_B$ d'autre part, restent inchangées. Par ailleurs, le fond se trouve de préférence radialement à l'intérieur des cercles de contact intérieurs $\Phi_I$, ce qui se traduit par l'inégalité:

$$L_0 < \frac{\Phi_I}{2}$$

Naturellement, diverses modifications sont possibles. Les facettes 52 ne sont pas nécessairement planes. Mais il reste important que le fond du bouchon soit en retrait par rapport à la partie la plus exposée du chemin de roulement lors de l'opération de trempe, et notamment par rapport aux cercles de contact. La bague intérieure peut être remplacée par un arbre, et plus généralement par une pièce pourvue d'un chemin de roulement. Le chemin de roulement n'a pas nécessairement un profil en ogive. D'autres formes de chemin permettent en effet de garantir deux points de contact par bille et par chemin de roulement et donc la tenue aux fortes charges qui est recherchée. Par exemple, il est possible de prévoir des chemins de roulement à profil en V. Par ailleurs, la section du puits n'est pas nécessairement circulaire.

## Revendications

1. Assemblage pour palier de roulement à billes, comprenant une bague annulaire métallique (24, resp. 22) définissant un axe géométrique de référence et présentant une face radiale annulaire (25, resp. 23) de diamètre $\Phi_M$ sur laquelle est formé un chemin de roulement (28, resp. 26) présentant un diamètre de fond de chemin $\Phi_F$, la bague étant traversée par un alésage radial (34) mettant en communication le chemin de roulement avec le milieu ambiant, l'alésage ayant une section intérieure permettant le passage de billes de rayon $R_B$ depuis l'extérieur de la bague jusqu'à la face radiale annulaire et un bouchon (40) obturant l'alésage, le bouchon ayant un fond (42) sensiblement perpendiculaire à son axe présentant une gorge (50) dans la continuité du chemin de roulement de sorte qu'il existe une surface de révolution qui enveloppe d'une part la totalité de la gorge et d'autre part la zone du chemin de roulement située au voisinage direct du fond du chemin de roulement, le bouchon étant radialement en retrait par rapport à la face radiale annulaire, la gorge (50) présentant une largeur axiale (D) inférieure au diamètre du fond du bouchon.

2. Assemblage selon la revendication 1, **caractérisé en ce que** le fond (42) du bouchon, axialement de part et d'autre de la gorge (50), est formé par au moins une facette (52) sensiblement plane située dans un même plan perpendiculaire à l'axe radial de l'alésage (34).

3. Assemblage selon la revendication 2, **caractérisé en ce que** le rebord (54) d'intersection entre la gorge et la ou les facettes planes (52) du fond du bouchon est sensiblement une ellipse.

4. Assemblage selon l'une quelconque des revendications précédentes, pourvu en outre de billes de rayon $R_B$, en contact avec le chemin de roulement suivant au moins une trajectoire circulaire de diamètre $\Phi_C$, **caractérisé en ce que** le fond (42) du bouchon se trouve à une distance $L_0$ de l'axe de rotation de la bague telle que:

$$min\left(\frac{\Phi_M}{2}, \frac{\Phi_C}{2}\right) < L_0 < max\left(\frac{\Phi_M}{2}, \frac{\Phi_C}{2}\right)$$

5. Assemblage selon l'une quelconque des revendications précédentes, **caractérisé en ce que** le fond (42) du bouchon se trouve à une distance $L_0$ de l'axe de rotation de la bague telle que:

$$\left|\frac{\Phi_F}{2} - L_0\right| \leq \frac{|\Phi_F - \Phi_M|}{8}$$

et

$$min\left(\frac{\Phi_M}{2}, \frac{\Phi_F}{2}\right) < L_0 < max\left(\frac{\Phi_M}{2}, \frac{\Phi_F}{2}\right)$$

**6.** Assemblage selon l'une quelconque des revendications 1 à 3, **caractérisé en ce que** le bouchon (40) est pourvu d'une portée annulaire (44) venant en appui sur une portée correspondante de l'alésage (34).

**7.** Assemblage selon l'une quelconque des revendications précédentes, **caractérisée en ce que** la bague (24, resp. 22) et le bouchon sont traversés par une goupille de fixation (48).

**8.** Assemblage selon l'une quelconque des revendications précédentes, **caractérisée en ce qu'**un joint (45) est disposé entre le bouchon (40) et l'alésage (34).

**9.** Assemblage selon l'une quelconque des revendications précédentes, **caractérisé en ce que** l'alésage (34) a une section circulaire.

**10.** Assemblage selon l'une quelconque des revendications précédentes, **caractérisé en ce que** le bouchon (40) est en acier.

**11.** Assemblage selon l'une quelconque des revendications précédentes, **caractérisé en ce que** le chemin de roulement (28, resp. 26) et la gorge (50) sont rectifiées ou superfines.

**12.** Assemblage selon l'une quelconque des revendications précédentes, **caractérisé en ce que** la structure métallurgique de la bague (24, resp. 22) au niveau du chemin de roulement (28, resp. 26) et la structure métallurgique du bouchon (40) au niveau de la gorge (50) sont caractéristiques d'une trempe locale.

**13.** Assemblage selon l'une quelconque des revendications précédentes, **caractérisé en ce que** le chemin (28, resp. 26) de roulement a dans un plan axial de la bague (24, resp. 22) une section en ogive composée de deux arcs de cercle, la gorge (50) ayant également dans un plan axial de la bague une section en ogive composée de deux arcs de cercle de rayon $R_1$.

**14.** Assemblage selon l'une quelconque des revendications précédentes, **caractérisé en ce que** la face radiale annulaire (25) est tournée radialement vers l'extérieur.

**15.** Assemblage selon l'une quelconque des revendications 1 à 13, **caractérisé en ce que** la face radiale annulaire (25) est tournée radialement vers l'intérieur.

**16.** Assemblage selon l'une quelconque des revendications précédentes, **caractérisé en ce qu'**il comporte en outre une pièce (22) pourvue d'un chemin de roulement (26, 28) situé en regard du chemin de roulement (28, 26) de la bague (24) et des billes (30) roulant sur les chemins de roulement, les billes ayant chacune deux points de contact avec le chemin de roulement de la bague (24) et deux points de contact avec le chemin de roulement de la pièce (22).

**17.** Assemblage selon l'une quelconque des revendications 1 à 15 et 16, **caractérisé en ce que** la bague (24) est une bague extérieure, les deux points de contact des billes avec le chemin de roulement (28) de la bague décrivant deux cercles de contact extérieurs ($\phi_C = \phi_E$) lors de la rotation du roulement 2, le fond (42) du bouchon (40) étant situé radialement à l'exterieur des deux cercles de contact extérieurs.

**18.** Assemblage selon l'une quelconque des revendications 1 à 15 et 16, **caractérisé en ce que** la bague (22) est une bague intérieure, les deux points de contact des billes avec le chemin de roulement (26) de la bague décrivant deux cercles de contact intérieurs ($\phi_C = \phi_I$) lors de la rotation du roulement, le fond du bouchon étant situé radialement à l'intérieur des deux cercles de contact intérieurs.

**19.** Assemblage selon l'une quelconque des revendications 16 à 18, **caractérisé en ce que** la pièce constitue une deuxième bague.

**Patentansprüche**

1. Montage für ein Kugelwälzlager, umfassend einen ringförmigen Metallring (24 bzw. 22), der eine geometrische Referenzachse definiert, und eine radiale ringförmige Seite (25 bzw. 23) mit einem Durchmesser $\Phi_M$ aufweist, auf dem eine Laufbahn (28 bzw. 26) ausgebildet ist, die einen Bodendurchmesser der Bahn $\Phi_F$ aufweist, wobei der Ring von einer radialen Bohrung (34) durchdrungen wird, die die Laufbahn mit dem umgebenden Medium in Kommunikation bringt, wobei die Bohrung einen Innenquerschnitt aufweist, der den Durchgang von Kugeln mit einem Radius $R_B$ von der Außenseite des Rings bis zur radialen ringförmigen Seite ermöglicht, und einen Verschlussdeckel (40), der die Bohrung verschließt, wobei der Verschlussdeckel einen Boden (42) aufweist, der zu seiner Achse im Wesentlichen lotrecht ist, der eine Nut (50) in der Fortsetzung der Laufbahn aufweist, so dass eine Rotationsfläche vorhanden ist, die einerseits die Gesamtheit der Nut und andererseits den Bereich der Laufbahn umgibt, der sich direkt benachbart zum Boden der Laufbahn befindet, wobei der Verschlussdeckel bezogen auf die radiale ringförmige Seite radial zurückgesetzt ist, wobei die Nut (50) einen axiale Breite (D) aufweist, die kleiner als der Durchmesser des Bodens des Verschlussdeckels ist.

2. Montage nach Anspruch 1, **dadurch gekennzeichnet, dass** der Boden (42) des Verschlussdeckels axial beiderseits der Nut (50) durch mindestens eine im Wesentlichen ebene Facette (52) ausgebildet ist, die in einer gleichen lotrechten Ebene zur radialen Achse der Bohrung (34) liegt.

3. Montage nach Anspruch 2, **dadurch gekennzeichnet, dass** der Rand (54) der Schnittstelle zwischen der Nut und der oder den ebenen Facetten (52) des Bodens des Verschlussdeckels im Wesentlichen eine Ellipse ist.

4. Montage nach einem der vorhergehenden Ansprüche, die ferner mit Kugeln mit einem Radius $R_B$ in Kontakt mit der Laufbahn, die mindestens einem kreisförmigen Weg mit Durchmesser $\Phi_C$ folgt, versehen ist, **dadurch gekennzeichnet, dass** sich der Boden (42) des Verschlussdeckels in einem Abstand $L_0$ von der Rotationsachse des Rings befindet, so dass:

$$min\left(\frac{\Phi_M}{2}, \frac{\Phi_C}{2}\right) < L_0 < max\left(\frac{\Phi_M}{2}, \frac{\Phi_C}{2}\right)$$

5. Montage nach einem der vorhergehenden Ansprüche, **dadurch gekennzeichnet, dass** sich der Boden (42) des Verschlussdeckels in einem Abstand $L_0$ von der Rotationsachse des Rings befindet, so dass:

$$\left|\frac{\Phi_F}{2} - L_0\right| \leq \frac{|\Phi_F - \Phi_M|}{8}$$

und

$$min\left(\frac{\Phi_M}{2}, \frac{\Phi_F}{2}\right) < L_0 < max\left(\frac{\Phi_M}{2}, \frac{\Phi_F}{2}\right)$$

6. Montage nach einem der Ansprüche 1 bis 3, **dadurch gekennzeichnet, dass** der Verschlussdeckel (40) mit einer ringförmigen Auflagefläche (44) ausgestattet ist, die auf einer entsprechenden Auflagefläche der Bohrung (34) zur Anlage kommt.

7. Montage nach einem der vorhergehenden Ansprüche, **dadurch gekennzeichnet, dass** der Ring (24 bzw. 22) und der Verschlussdeckel von einem Haltestift (48) durchdrungen werden.

8. Montage nach einem der vorhergehenden Ansprüche, **dadurch gekennzeichnet, dass** eine Dichtung (45) zwischen dem Verschlussdeckel (40) und der Bohrung (34) angeordnet ist.

9. Montage nach einem der vorhergehenden Ansprüche, **dadurch gekennzeichnet, dass** die Bohrung (34) einen kreisförmigen Querschnitt aufweist.

10. Montage nach einem der vorhergehenden Ansprüche, **dadurch gekennzeichnet, dass** der Verschlussdeckel (40) aus Stahl ist.

11. Montage nach einem der vorhergehenden Ansprüche, **dadurch gekennzeichnet, dass** die Laufbahn (28 bzw. 26) und die Nut (50) nachgeschliffen oder feinstgeschliffen sind.

12. Montage nach einem der vorhergehenden Ansprüche, **dadurch gekennzeichnet, dass** die metallurgische Struktur des Rings (24, bzw. 22) an der Laufbahn (28 bzw. 26) und die metallurgische Struktur des Verschlussdeckels (40) an der Nut (50) für eine lokale Härtung charakteristisch sind.

13. Montage nach einem der vorhergehenden Ansprüche, **dadurch gekennzeichnet, dass** die Laufbahn (28 bzw. 26) in einer axialen Ebene des Rings (24 bzw. 22) einen spitzkegelförmigen Querschnitt aufweist, der aus zwei Kreisbögen besteht, wobei die Nut (50) ebenfalls in einer axialen Ebene des Rings einen spitzkegelförmigen Querschnitt aufweist, der aus zwei Kreisbögen mit einem Radius $R_1$ besteht.

14. Montage nach einem der vorhergehenden Ansprüche, **dadurch gekennzeichnet, dass** die radiale ringförmige Seite (23) radial nach außen gedreht ist.

15. Montage nach einem der Ansprüche 1 bis 13, **dadurch gekennzeichnet, dass** die radiale ringförmige Seite (25) radial nach innen gedreht ist.

16. Montage nach einem der vorhergehenden Ansprüche, **dadurch gekennzeichnet, dass** sie ferner ein Stück (22), das mit einer Laufbahn (26, 28) ausgestattet ist, die gegenüber der Laufbahn (28, 26) des Rings (24) liegt, und Kugeln (30) umfasst, die auf den Laufbahnen rollen, wobei die Kugeln jeweils zwei Kontaktpunkte mit der Laufbahn des Rings (24) und zwei Kontaktpunkte mit der Laufbahn des Stücks (22) aufweisen.

17. Montage nach einem der Ansprüche 1 bis 15 und 16, **dadurch gekennzeichnet, dass** der Ring (24) ein äußerer Ring ist, wobei die zwei Kontaktpunkte der Kugeln mit der Laufbahn (28) des Rings zwei äußere Kontaktkreise ($\Phi_C = \Phi_E$) während der Rotation des Lagers beschreiben, wobei der Boden (42) des Verschlussdeckels (40) radial außerhalb der beiden äußeren Kontaktkreise liegt.

18. Montage nach einem der Ansprüche 1 bis 15 und 16, **dadurch gekennzeichnet, dass** der Ring (22) ein innerer Ring ist, wobei die zwei Kontaktpunkte der Kugeln mit der Laufbahn (26) des Rings während der Rotation des Lagers zwei innere Kontaktkreise ($\Phi_C = \Phi_I$) beschreiben, wobei der Boden des Verschlussdeckels radial innerhalb der beiden inneren Kontaktkreise liegt.

19. Montage nach einem der Ansprüche 16 bis 18, **dadurch gekennzeichnet, dass** das Stück einen zweiten Ring darstellt.

**Claims**

1. Assembly for a ball bearing, comprising a metal annular ring (24, resp 22) defining a reference geometric axis and having an annular radial face (25, resp 23) of diameter $\Phi_M$ on which there is formed a raceway (28, resp 26) having a raceway bottom diameter $\Phi_F$, the ring being passed through by a radial bore (34) which puts the raceway into communication with the environment, the bore having an inner section allowing balls of radius $R_B$ to pass from the outside of the ring to the annular radial face, and a plug (40) closing off the bore, the plug having a bottom (42), approximately perpendicular to its axis, having a groove (50) continuing the raceway such that there is a surface of revolution which covers not only all of the groove but also the region of the raceway located directly next to the bottom of the raceway, the plug being radially setback with respect to the annular radial face, the groove (50) having an axial width (D) smaller than the diameter of the bottom of the plug.

2. Assembly according to Claim 1, **characterized in that** the bottom (42) of the plug, axially on either side of the groove (50), is formed by at least one substantially planar facet (52) located in a single plane perpendicular to the radial axis of the bore (34).

3. Assembly according to Claim 2, **characterized in that** the edge (54) of intersection between the groove and the planar facet or facets (52) of the bottom of the plug is substantially in the form of an ellipse.

4. Assembly according to any one of the preceding claims, furthermore provided with balls of radius $R_B$ in contact with the raceway along at least one circular trajectory of diameter $\Phi_C$, **characterized in that** the bottom (42) of the plug is located at a distance $L_0$ from the axis of rotation of the ring such that:

$$min\left(\frac{\Phi_M}{2},\frac{\Phi_C}{2}\right) < L_0 < max\left(\frac{\Phi_M}{2},\frac{\Phi_C}{2}\right)$$

5. Assembly according to any one of the preceding claims, **characterized in that** the bottom (42) of the plug is located at a distance $L_0$ from the axis of rotation of the ring such that:

$$\left|\frac{\Phi_F}{2} - L_0\right| \le \frac{\left|\Phi_F - \Phi_M\right|}{8}$$

and

$$min\left(\frac{\Phi_M}{2},\frac{\Phi_F}{2}\right) < L_0 < max\left(\frac{\Phi_M}{2},\frac{\Phi_F}{2}\right)$$

6. Assembly according to any one of Claims 1 to 3, **characterized in that** the plug (40) is provided with an annular shoulder (44) bearing against a corresponding shoulder of the bore (34).

7. Assembly according to any one of the preceding claims, **characterized in that** the ring (24, resp 22) and the plug are passed through by a securing pin (48).

8. Assembly according to any one of the preceding claims, **characterized in that** a seal (45) is located between the plug (40) and the bore (34).

9. Assembly according to any one of the preceding claims, **characterized in that** the bore (34) has a circular section.

10. Assembly according to any one of the preceding claims, **characterized in that** the plug (40) is made of steel.

11. Assembly according to any one of the preceding claims, **characterized in that** the raceway (28, resp 26) and the groove (50) are ground or superfinished.

12. Assembly according to any one of the preceding claims, **characterized in that** the metallurgical structure of the ring (24, resp 22) in the region of the raceway (28, resp 26) and the metallurgical structure of the plug (40) in the region of the groove (50) are characteristic of local quenching.

13. Assembly according to any one of the preceding claims, **characterized in that** the raceway (28, resp 26) has a section in the form of a pointed arch composed of two circular arcs in an axial plane of the ring (24, resp 22), the groove (50) likewise having a section in the form of a pointed arch composed of two circular arcs of radius $R_1$ in an axial plane of the ring.

14. Assembly according to any one of the preceding claims, **characterized in that** the annular radial face (25) is turned radially outwards.

**15.** Assembly according to any one of Claims 1 to 13, **characterized in that** the annular radial face (25) is turned radially inwards.

**16.** Assembly according to any one of the preceding claims, **characterized in that** it also comprises a part (22) provided with a raceway (26, 28) facing the raceway (28, 26) of the ring (24) and balls (30) rolling on the raceways, the balls each having two points of contact with the raceway of the ring (24) and two points of contact with the raceway of the part (22).

**17.** Assembly according to any one of Claims 1 to 15 and 16, **characterized in that** the ring (24) is an outer ring, the two points of contact of the balls with the raceway (28) of the ring describing two outer circles of contact ($\Phi_C = \Phi_E$) during the rotation of the bearing, the bottom (42) of the plug (40) being located radially outside the two outer circles of contact.

**18.** Assembly according to any one of Claims 1 to 15 and 16, **characterized in that** the ring (22) is an inner ring, the two points of contact of the balls with the raceway (26) of the ring describing two inner circles of contact ($\Phi_C = \Phi_I$) during the rotation of the bearing, the bottom of the plug being located radially inside the two inner circles of contact.

**19.** Assembly according to any one of Claims 16 to 18, **characterized in that** the part constitutes a second ring.

Fig. 1

Fig. 2

Fig. 3

Fig. 4

Fig. 5

**EP 2 042 761 B1**

## RÉFÉRENCES CITÉES DANS LA DESCRIPTION

**Documents brevets cités dans la description**

- GB 2095346 A